# EUROPÄISCHE PATENTSCHRIFT

(11) **EP 3 078 113 B1**
(45) Veröffentlichungstag und Bekanntmachung des Hinweises auf die Patenterteilung: **03.04.2019**
(21) Anmeldenummer: 14809789.2
(22) Anmeldetag: 02.12.2014
(51) Int. Cl.: H02P 27/08, H02P 29/50, F04D 25/08

(54) **ELEKTROMOTOR MIT EINER VORRICHTUNG ZUR ERZEUGUNG EINER SIGNALFOLGE**
ELECTRIC MOTOR COMPRISING A DEVICE FOR GENERATING A SEQUENCE OF SIGNALS
MOTEUR ÉLECTRIQUE COMPRENANT UN DISPOSITIF DE GÉNÉRATION D'UNE SÉQUENCE DE SIGNAUX

(30) Priorität: 04.12.2013 DE 102013224876
(43) Veröffentlichungstag der Anmeldung: 12.10.2016
(73) Patentinhaber: Robert Bosch GmbH, 70442 Stuttgart (DE)
(72) Erfinder: BECKER, Markus, 77728 Oppenau (DE); VOLLMER, Ulrich, 73235 Weilheim (DE)
(86) Internationale Anmeldenummer: PCT/EP2014/076227
(87) Internationale Veröffentlichungsnummer: WO 2015/082459

(56) Entgegenhaltungen:
- EP-A2- 0 886 369
- DE-A1-102006 014 309
- DE-A1-102013 005 355
- JP-A- 2013 038 916
- US-A1- 2006 140 286

## Beschreibung

Die Erfindung betrifft ein Elektromotor mit einer Vorrichtung zur Erzeugung einer Signalfolge nach Gattung der unabhängigen Ansprüche.

Die Leistung, Drehzahl, Geschwindigkeit und Beschleunigung wird bei modernen Elektromotoren durch Motorsteuerungen geregelt, bzw. gesteuert. Hierbei erfolgt die Regelung der Elektromotoren über elektrische Schalter, die abhängig von der Position und der gewünschten Bewegung eines Rotors leitend oder sperrend geschaltet werden. Ferner wird bei der Erzeugung von Signalen, insbesondere zur Ansteuerung eines Elektromotors, durch die elektrischen Schalter elektromagnetische Energie abgestrahlt. Hinzu kommt das die Kabel, welche die Signale leiten, entsprechend einer Antenne wirken und elektromagnetische Abstrahlung verursachen.

Elektromotoren zum Antreiben eines Lüfters haben über längere Zeiträume eine gleichbleibende Geschwindigkeit, was durch eine gleichbleibende Ansteuersignalfolge erreicht wird. Somit werden die elektrischen Schalter mit einer gleichbleibenden Frequenz geschaltet. Die gesamte elektromagentische Abstrahlung erfolgt mit wenigen Frequenz, bzw. in einem beschränkten Frequenzbereich.

### Stand der Technik

Es ist ein Elektromotor mit einer Vorrichtung zur Erzeugung einer Signalfolge, wobei die Signalfolge eine Vielzahl an Signalblöcken umfasst und die Signalblöcke eine Vielzahl an Signalen mit einer Signaldauer, umfassen, bekannt. Auch ist bekannt, dass die Signale selbst als Puls ausgebildet sein können, wobei jeder Puls abhängig von der Pulsweite einen anderen Energiegehalt aufweist oder einer Information entspricht. Ein solches Signal wird als pulsweitenmoduliertes Signal bezeichnet.

Weiter ist bekannt, dass beispielsweise bei einer Pulsweitenmodulation, wobei die Signale aus einem rechteckförmigen Puls bestehen, die Dauer, bzw. die Weite der Pulse durch zufällige Verlängerung oder Verkürzung variiert werden. Die Variation der Pulsweiten hat eine Erhöhung der Anzahl an Schaltfrequenzen zur Folge. Eine Erhöhung der Anzahl Schaltfrequenzen führt zu einer Verteilung der abgestrahlten Energie auf die einzelnen Schaltfrequenzen, nachfolgend als Frequenzspreizung bezeichnet. Um die Energie gleichmäßig zu verteilen, muss die Variation der Pulsweite zufällig erfolgen. Erfolgt die Variation des Pulses zufällig, so ist es nicht möglich die ursprüngliche Pulsweite und damit verbunden die eigentliche Information des Pulses wieder herzustellen, bzw. zu ermitteln.

Die JP 2013 038916 A offenbart eine Motoransteuerung bei der die Signaldauer einzelner Signale variiert wird.

Die US 2006/140286 offenbart eine elektrische Leistungsschaltungsvorrichtung, die periodisch einen Schaltvorgang in Verbindung mit hohen Stromwerten bei einer spezifischen Schaltfrequenz durchführt.

### Offenbarung der Erfindung

Der erfindungsgemäße Elektromotor mit den Merkmalen des Hauptanspruchs hat eine Frequenzspreizung der elektromagnetisch abgestrahlten Energie zur Folge. Diese wird dadurch erreicht, dass die Signaldauer der einzelnen Signale variiert. Ein weiterer Vorteil ist, dass eine Ermittlung der ursprünglichen Signalfolge möglich ist. Für die Berechnung ist nur die Signaldauer und das Signal selbst notwendig. Weitere Informationen, die neben dem Ansteuersignal in die Signalfolge moduliert wurden, bleiben erhalten und können nachträglich ermittelt werden.

Als weiterer Vorteil ist anzusehen, dass der erfindungsgemäße Elektromotor einfach und kostengünstig in bestehende Systeme integriert werden kann.

Durch die in den Unteransprüchen aufgeführten Maßnahmen ergeben sich vorteilhafte Weiterbildungen und Verbesserungen der im Hauptanspruch angegebenen Merkmale.

Besonders Vorteilhaft ist, dass ein Signalblock eine definierte Anzahl n an Signalen umfasst und die Dauer mindestens von zwei Signalblöcken konstant ist. Die Signalböcke umfassen eine definierte Anzahl an Signalen. Die Dauer von aufeinanderfolgenden Signalblöcken ist konstant, bzw. identisch. Die Signalblockdauer entspricht der Periodendauer der Signalblöcke. Die Signalblöcke haben somit eine konstante Frequenz. Der in periodischen zeitlichen Abständen wiederkehrende Signalblockanfang kann als Taktsignal für weitere Einrichtungen verwendet werden. Eine konstante Periodendauer ermöglicht die Verwendung der Signalfolge in mehreren Einsatzgebieten rund um den Elektromotor, beispielsweise als Prozessortakt, Sensortakt, Kommunikationstakt oder zur Ansteuerung des Elektromotors. Es werden somit keine weiteren Hardware- oder Softwarekomponenten zur Erzeugung oder Berechnung eines Taktes benötigt. Dies hat eine Vereinfachung des Elektromotors und damit eine erleichterte und kostengünstigere Herstellung zur Folge. Auch eine Synchronisation der einzelnen Komponenten eines Elektromotors ist möglich. Der Einsatz einer zusätzlichen Verkabelung zur Übertragung eines Taktes, beispielsweise eines Systemtaktes, zu weiteren Komponenten des Elektromotors oder zusätzlichen Komponenten außerhalb des Elektromotors ist durch den erfindungsgemäßen Gegenstand möglich.

Eine besonders einfache Ausbildung ist, dass der Elektromotor durch die Signalfolge, insbesondere direkt oder über eine Motoransteuerung angesteuert wird. Die Vorrichtung erzeugt eine Signalfolge, die einer Motoransteuerung zugeführt wird. Die Motoransteuerung kann auch in die Vorrichtung integriert sein. Die Motoransteuerung erzeugt abhängig von der Signalfolge eine Drehbewegung des Rotors des Elektromotors.

Erfindungsgemäß umfasst jeder Signalblock eine erste und eine zweite Signalgruppe. Als besonders vorteilhaft ist anzusehen, dass die Signale der ersten Signalgruppe, zeitlich betrachtet, vor den Signalen der zweiten Signalgruppe ausgegeben werden. Die Signaldauer der ersten Signalgruppe, insbesondere der n-2 Signale eines Signalblocks, werden durch einen Zufallsgenerator oder einer Tabelle, insbesondere einer Look-UP Tabelle bestimmt. Eine Bestimmung der Dauer der Signale der ersten Signalgruppe auf Basis eines Zufallsgenerators oder einer Tabelle ermöglicht eine verbesserte Spreizung des Frequenzspektrums der elektromagnetisch abgestrahlten Energie. Somit ist aufgrund einer im Wesentlichen zufälligen Bestimmung der Dauer der Signale eine verringerte elektromagnetische Abstrahlung des Elektromotors zu erreichen. Dennoch kann das ursprünglich Signal, bzw. die ursprüngliche Information ermittelt, insbesondere berechnet werden.

Gemäß der Erfindung ergibt sich, dass die Signaldauer der Signale der zweiten Signalgruppe, insbesondere die letzten beiden Signale eines Signalblocks, berechnet oder aus einer zweiten Tabelle entnommen werden. Die Dauer der Signale der zweiten Signalgruppe wird berechnet oder einer zweiten Tabelle entnommen. Die Dauer der Signale der zweiten Signalgruppe ist abhängig von der Dauer aller Signale der ersten Signalgruppe. Die Dauer der Signale der zweiten Signalgruppe müssen abhängig von der Gesamtdauer der Signale der ersten Signalgruppe ermittelt, insbesondere berechnet oder über eine Tabelle bestimmt, werden. Es kann zweckmäßig sein, dass die Anzahl der Signale, die der zweiten Signalgruppe angehören dabei abhängig von der Anzahl der Signale eines Signalblocks ist.

Die Dauer aller Signale einer Signalblocks darf eine zuvor definierte Dauer nicht übersteigen.

Gemäß der Erfindung ergibt sich, dass die Berechnung der Signaldauer der Signale der zweiten Signalgruppe so erfolgt, dass die definierte Dauer eines Signalblocks und die Summe der Dauer aller Signale eines Signalblocks im Wesentlichen gleich sind. Die Signaldauer der Signale der ersten Signalgruppe wird vorteilhafterweise durch einen Zufallsgenerator oder eine Tabelle bestimmt. Damit dennoch die Dauer der Signalblöcke konstant bleibt, wird die Dauer der letzten Signale eines Signalblocks rechnerisch oder mit einer Tabelle ermittelt. Dies hat den Vorteil das einfache Addierer und Subtrahierer ausreichen. Somit kann die Dauer der Signale der ersten Signalgruppe mit minimalem Hardware- und Softwareaufwand umgesetzt werden. Weiter erfolgt die Berechnung nicht durchgehend, weshalb der Energieverbrauch der Vorrichtung gegenüber einer ständigen, bzw. durchgängigen Berechnung gesenkt ist.

Es ist als besonders vorteilhaft anzusehen, dass die Signalfolge ein pulsbreitenmodulierte Signalfolge ist und die Signaldauer eines Signals mindestens die Dauer eines Pulses und mindestens die Dauer einer Pulspause umfasst. Für die Ansteuerung von Elektromotoren werden häufig pulsweitenmodulierte Signale eingesetzt. Die Pulse sind im Wesentlichen rechteckförmig, dreieckförmig oder sinusförmig. Die Pulsbreitenmodulierte Signale können sehr einfach in die Signale der Signalfolge moduliert werden.

Ferner ist auch Möglich, dass ein Signal mehrere Pulse umfasst.

Vorteilhaft ist, dass ein erster und ein zweiter Grenzwert einen Bereich für die Variation der Signaldauer der Signale definieren. Durch eine Festlegung von Grenzwerten wird verhindert, dass die einzelnen Signale extrem voneinander abweichen. Weiter wird verhindert das aufgrund der Dauer der Signale, diese durch die Hardware oder die Software nicht mehr verarbeitet werden können. Weiter wird verhindert, dass ein Signalblock aufgrund erhöhter Signaldauer einzelner Signale nicht die festgelegte Anzahl an Signalen umfassen kann.

### Beschreibung der Figuren

Ein Ausführungsbeispiel der Erfindung ist in den Zeichnungen dargestellt und in der nachfolgenden Beschreibung näher erläuter. Es zeigen:
Figur 1 eine Signalfolge, mit Signalblöcken und Signalen gemäß dem Stand der Technik,
Figur 2 ein Puls eines pulsweitenmodulierten Signals,
Figur 3 eine einfache Motoransteuerung für einen Bürsten-Elektromotor,
Figur 4 einen Motorsteuerung mit einer Vollbrücke,
Figur 5 eine Motoransteuerung für einen drei phasigen bürstenlosen Elektromotor,
Figur 6 eine von der Vorrichtung erzeugte erfindungsgemäße Signalfolge,
Figur 7 eine Vorrichtung und
Figur 8 eine beispielhafte Signalfolge mit pulsweitenmodulierten Signalen.

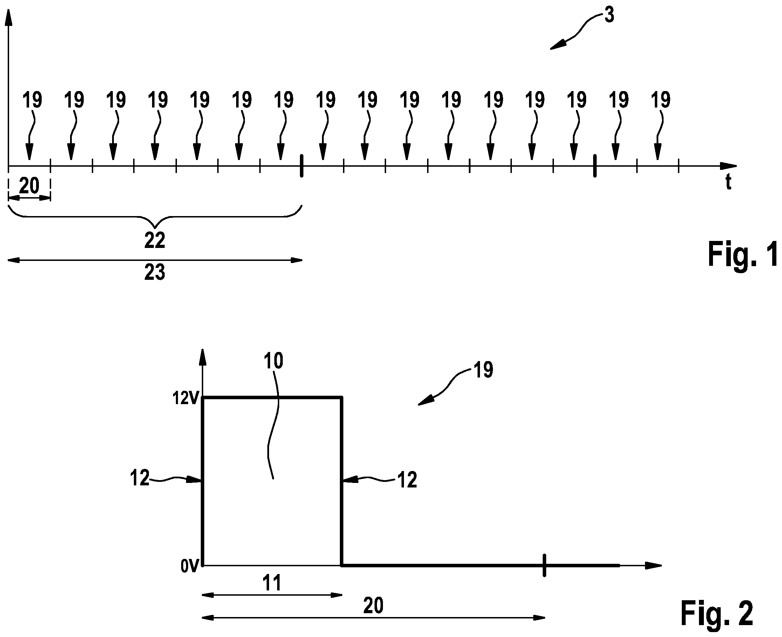

In Figur 1 ist eine Signalfolge 3, mit Signalen 19, mit fester Signaldauer 20 gezeigt. Gemäß dem Hauptanspruch umfasst eine Signalfolge 3 eine Vielzahl, insbesondere mindestens 2, Signalblöcken 22. Die Signalblöcke 22 umfassen wiederum eine Vielzahl, insbesondere mindestens zwei, Signale 19. In Figur 1 umfasst beispielhaft ein Signalblock 22 sieben Signale 19. Jedes Signal 19 weist eine konstante, bzw. feste Signaldauer 20 auf. Die Signaldauer 20 aller Signale 19 ist in der Signalfolge, gemäß Figur 1, gleich. Die feste Signaldauer 20 kann der Periodendauer eines Signals 19 entsprechen. Der Kehrwert der Signaldauer 20 entspricht der Frequenz des Signals 19. Durch die konstante Signaldauer 20 ist die Frequenz, mit der ein Signal 19 beginnt, ebenfalls konstant.

Weiter ist in Figur 2 beispielhaft ein Signal 19, welches einen rechteckförmigen Puls 10 umfasst, gezeigt. Der Puls 10 ist erfindungsgemäß jedoch nicht auf eine rechteckform beschränkt, auch dreieckförmige, runde, sinusförmige oder anders geformte Pulse 10 sind möglich. Die Dauer, bzw. die Länge, insbesondere die Weite eines Pulses 10 wird im Folgenden als Pulsdauer 11 bezeichnet. Die Pulsdauer 11 kann maximal solange wie die Signaldauer 20 sein. Die Pulsdauer 19 und damit verbunden die Größe eines Pulses entscheidet über die Energiemenge oder die Information, die ein Signal 19 trägt. Man nennt eine solche Signalfolge 3 eine pulsweitenmodulierte Signalfolge 3.

Ferner ist auch möglich, dass ein Signal 19 mehrere Pulse 10 enthält. Bei einer rechteckförmigen Pulsweitenmodulation wechselt eine technische Größe, insbesondere Spannung oder Strom, zwischen zwei Werten. In Figur 2 ist als technischer Wert die Spannung V angegeben. Die Spannung V des Signals 19 wechselt, wie in Figur 2 dargestellt zwischen 0 V und 12V und bildet einen Puls 10. Die Höhe der Spannung des Pulses ist abhängig von der zur Verfügung stehenden Spannung, insbesondere Versorgungsspannung. Gleiches gilt für den Strom oder die Energie. Die Versorgungsspannung entspricht bei einem Fahrzeug, insbesondere Elektrofahrrad, Roller, Motorrad, Auto, LKW oder Bus, der Spannung der Batterie, insbesondere zwischen 12 - 240 V, vorzugsweise 12V (Auto), 24V (LKW, Bus) oder 36V (Fahrrad, Roller).

Moderne Elektromotoren 1 werden mit pulsweitenmodulierten Signalen 19 angesteuert. Hierbei wird abhängig von der Pulsdauer 11 eine gewünschte Energiemenge an den Elektromotor 1 übertragen. Durch die Pulsweitenmodulation, nachfolgend PWM bezeichnet, kann beispielsweise die Beschleunigung, die Verzögerung oder die Geschwindigkeit eines Elektromotors 1 bestimmt werden.

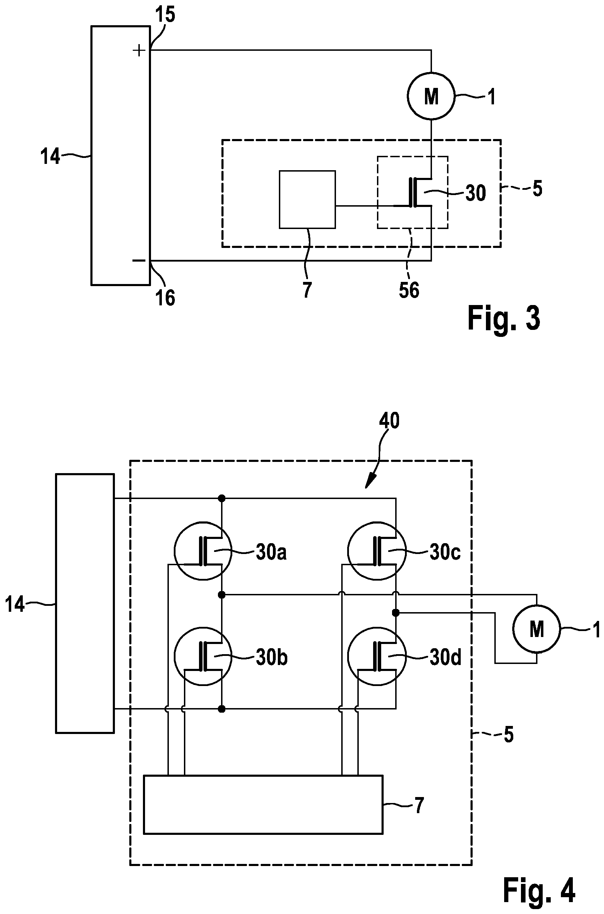

Abhängig von der Art der Elektromotoren 1 und des gewünschten Einsatzbereichs umfasst die Vorrichtung 5 eine Motorsteuerung 56, mit mindestens einem elektrischen Schalter 30, zur Ansteuerung des Elektromotors 1. Eine einfache Ausgestaltung für die Ansteuerung eines Elektromotors 1 ist in Figur 3 gezeigt.

Ein bürstenkommutierter Elektromotor 1 ist über einen elektrischen Schalter 30, insbesondere ein Halbleiterschalter, vorzugsweise einem Transistor oder einem MosFET mit einer Energiequelle 14, die einen Pluspol 15 und einen Minuspol 15 aufweist, verbunden. Der elektrische Schalter 30 wird abhängig von einer durch einen Mikroprozessor 7 erzeugte Signalfolge 3 leitend oder sperrend geschaltet. Ein elektrischer Schalter 30 weist bei Schaltzuständen zwischen 80% und 100% leitend, einen erhöhten Widerstand und damit verbunden einen erhöhte Verlust, bzw. eine erhöhte Abwärme auf. Daher wird versucht diesen Bereich möglichst zu umgehen, bzw. schnellstmöglich zu durchlaufen. Aufgrund dessen wird bei den meisten Ansteuerungssignalfolgen ein rechteckförmiger Puls 10 verwendet. Der Puls 10 kann durch im Wesentlichen 100% leitend oder sperrend schalten des elektrischen Schalter 30 erzeugt werden. Die rechteckförmigen Pulse 10 weisen gemäß Figur 2 eine möglichst steile Pulsflanken 12 auf. Abhängig von der Steile der Pulsflanken 12 ist jedoch die elektromagnetische Abstrahlung des gesamten Aufbaus. Die elektrischen Schalter 30 haben abhängig von der Steile der Pulsflanke 12 eine elektromagnetische Abstrahlung. Auch die Leitungsabschnitte welche die Pulsfolge 3 leiten, wirken wie eine Antenne und verstärken die durch den Aufbau abgestrahlte elektromagnetische Energie. Es muss somit abgewägt werden, ob eine erhöhte Erwärmung der elektrischen Schalter 30 oder eine erhöhte elektromagnetische Abstrahlung für den Anwendungsbereich möglich ist.

Soll der Elektromotor 1 vorwärts und rückwärts drehen können, werden weitere elektrische Schalter 30, wie in Figur 4 gezeigt, benötigt. Die elektrischen Schalter 30a bis 30d sind als eine Vollbrücke 40 angeordnet. Ein Mikroprozessor 7 erzeugt mehrere Signalfolgen 3, welche die elektrischen Schalter 30 ansteuern. Abhängig von der Signalfolge 3 leiten oder sperren die elektrischen Schalter 30 einen Stromfluss von der Energiequelle 14 zum Elektromotor 1. Die elektrischen Schalter erzeugen dabei eine Signalfolge 3 mit im Wesentlichen identischen Signalen 19. Einzig die Höhe und damit die Energiemenge unterscheiden die Signalfolgen 3 voneinander. Die elektrischen Schalter 30a bis 30d, der Motorsteuerung, bzw. der Vollbrücke wirken wie ein Signalverstärker.

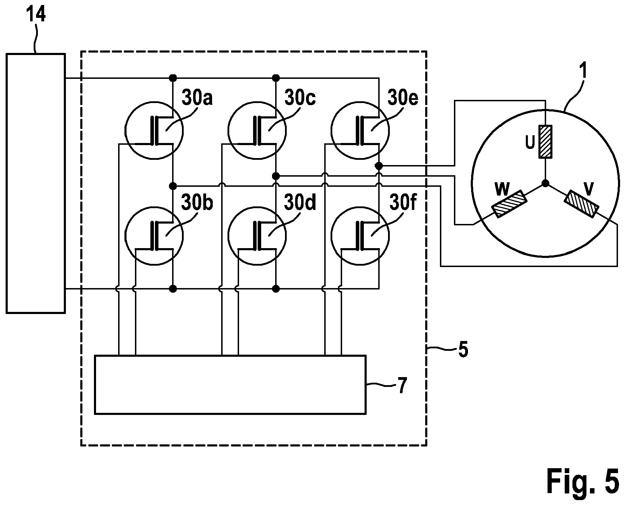

Figur 5 zeigt eine Ansteuerung eines bürstenlosen Elektromotors 1. Der bürstenlose Elektromotor 1 umfasst drei Stränge U, V und W, die zu einem Stern verschaltet sind. Die Stränge können aus mehreren parallelen oder in reihe geschalteten Spulen bestehen. Es ist auch möglich, dass die drei Stränge U, V und W als Dreieck verschaltet sind. Durch die Ansteuerung der elektrischen Schalter 30a bis 30f mit Signalfolgen 3 der Vorrichtung 5 werden die Stränge U, V und W, entsprechend der Position eines Rotors, des Elektromotors 1 bestromt. Durch die Bestromung wird ein Drehfeld erzeugt, das Magnete, die an einem Rotor angebracht sind, anzieht und somit den Rotor mitreißt. Es wird eine Rotordrehung erzeugt.

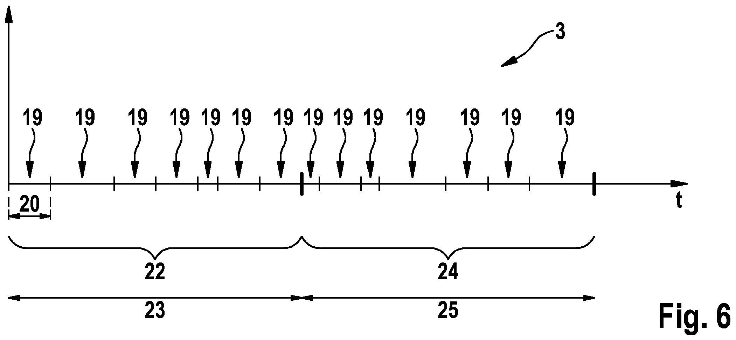

In Figur 6 ist eine Signalfolge 3 einer erfindungsgemäßen Vorrichtung 5 eines Elektromotors 1 gezeigt. In der Figur 6 sind ausschnittsweise ein erster Signalblock 22 und ein zweiter Signalblock 24 gezeigt. Die beiden Signalblöcke 22, 24 sowie alle weiteren Signalblöcke der Signalfolge 3 weisen beispielhaft 7 Signale 19 auf. Die Signale 19 weisen eine Signaldauer 20 auf. Die Signaldauer 20 variiert zwischen den einzelnen Signalen 19. Die Vorrichtung 5 variiert die Signaldauer 20 der Signale, so dass möglichst selten, bzw. unregelmäßig eine gleiche Signaldauer 20 zweier Signale 19 in der Signalfolge 3 auftritt, bzw. eine Wiederholung einer gleichen Signaldauer 20 in größeren zeitlichen Abständen erfolgt. Die Summe aller Signaldauer 20 aller Signale 19 eines Signalblocks 22 ist immer gleich. Die Signalblockdauer 23 des ersten Signalblocks 22 ist gleich ausgebildet wie die Signalblockdauer 25 des zweiten Signalblocks 24 und so weiter. Die Signalblockdauer 23, 25 entspricht somit der Periodendauer der Signalblöcke 22, 24.

Die konstante Frequenz der Signalböcke 22, 24 kann beispielsweise für weitere Informationen oder zur Taktung weiterer Einrichtung des Elektromotors 1 verwendet werden. Die ohne die feste Frequenz chaotische Signalfolge 3, gemäß dem Stand der Technik, benötigt beispielsweise aufwendige Algorithmen in Software oder Hardware für eine zusätzliche Verarbeitung der Signalfolge. Eine feste Frequenz kann zum Beispiel für Sensoren nötig sein.

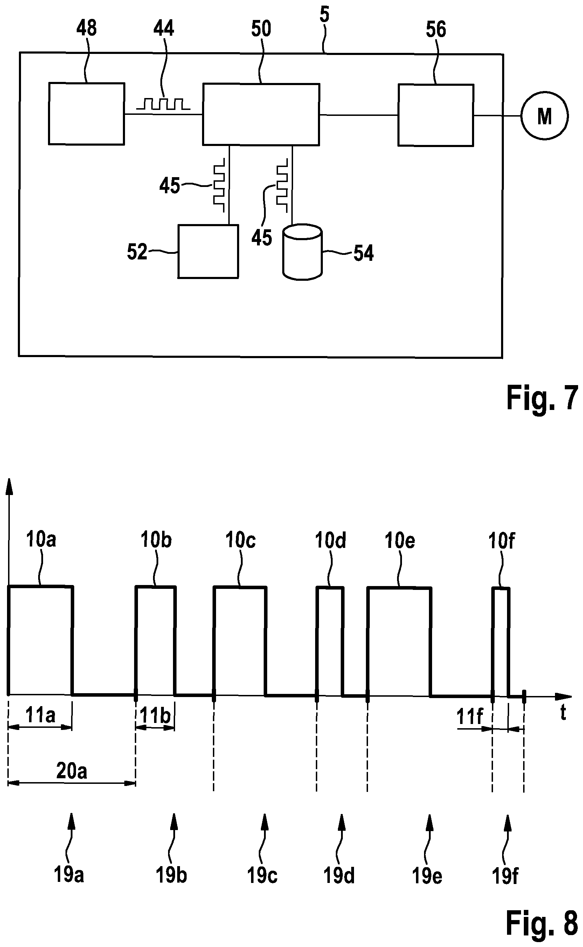

Die Vorrichtung 5 des Elektromotors 1 erzeugt eine erste Signalfolge 44. Die erste Signalfolge 44 ist abhängig von einer vom Benutzer oder einer automatischen Steuerung gewünschten Geschwindigkeit des Elektromotors 1. Beispielhaft ist in Figur 7 ein Geschwindigkeitsregler 48 dargestellt. Der Geschwindigkeitsregler 48 umfasst insbesondere eine automatische Steuerung, welche auf Informationen beispielsweise eines Sensors, vorzugsweise eines Temperatursensor oder eines Kommunikationsbus, wie CAN, LIN usw. zurückgreift. Die erste Signalfolge 44, beispielhaft als rechteckförmige Pulsweitenmodulation in Figur 7 dargestellt, wird in der Vorrichtung 5 einem Modulator 50 zugeführt. Der Modulator 50 moduliert die erste Signalfolge 44 abhängig von einer zweiten Signalfolge 45. Die zweite Signalfolge 45 wird von einem Zufallsgenerator 52, einer Tabelle 54, einem Sensor, einer weiteren Motorsteuerung usw. erzeugt. Abhängig von der zweiten Signalfolge 45 wird die erste Signalfolge 44 verändert. Hierbei wird die Signaldauer 20 der einzelnen Signale 19 variiert. Die zweite Signalfolge 45 könnte nun als Signalfolge 3 einen Elektromotor 1 ansteuern. Die Anzahl der separaten Signalfolgen 3 hängt von der Art der Ansteuerung und der Motorsteuerung ab. Für Leistungsstarke, elektrisch kommutierte Elektromotoren 1 oder Elektromotoren 1 die Vorwärts und Rückwärts laufen sollen, werden die Signalfolgen durch eine Motoransteuerung 56 nochmals verstärkt. In Figur 3, 4 und 5 wurden bereits Motoransteuerungen 56 gezeigt und in der Beschreibung erläutert. Die Motoransteuerungen 40, 56 sind jedoch nicht auf diese exemplarisch beschriebenen Motoransteuerungen 56, 40 beschränkt.

In Figur 8 ist eine Signalfolge mit rechteckförmigen pulsweitenmodulierten Signalen 19 gemäß eines Ausführungsbeispiels dargestellt. Der beispielhaft gezeigte Signalblock 22 umfasst sechs Signale 19. Die Signaldauer 20 der sechs Signale 20a bis 20f variiert. Jedes Signal 19a bis 19f umfasst einen Puls 10a bis 10f mit einer Pulsweite 11a bis 11f. Die Pulsweite 11a bis 11f wird durch den Mikroprozessor 7 oder einen Geschwindigkeitsregler 48 bestimmt. Die Pulsweite 11 der Signale 19 entspricht der zur Übertragung gewünschten Information oder Energiemenge. In Figur 8 entspricht beispielhaft die Pulsweite 50% bzw. ein Tastgrad 50%. Der Tastgrad ist das Verhältnis von Pulsdauer 11 zu Signaldauer 20. Somit entspricht die Pulsweite 11 auch 50% der Signaldauer 20. Die weiteren 50% der Signaldauer 20 entsprechen der Pulspause. Somit entspricht die Signaldauer 20, abzüglich der Pulsweite 11, der Pulspause. Das PWM-Signal weist somit einen Tastgrad von 50% auf. Bei einem Tastgrad von 30% entspricht die absolute Dauer eines Pulses 30% der Signaldauer 20. Die Signaldauer 20 variiert zwischen den einzelnen Signalen 19a - 19f. Die absolute Pulsweite 11a bis 11f variiert entsprechend der Signaldauer 20. Damit variiert auch die absolute Pulsweite 11a bis 11f zwischen den einzelnen Pulsen der Signale 19a - 19f. Das Verhältnis zwischen Pulsdauer 11 und Signalweite 20 ist in diesem Beispiel identisch. Durch das Variieren der Pulsdauer 11 werden die Einschalt- und Ausschaltzeitpunkte der elektrischen Schalter variiert. Die abgestrahlte Energie wird auf ein breites Frequenzspektrum verteilt.

Ferner ist möglich den Tastgrad von Signal 19 zu Signal 19 zu variieren. Möglich ist auch den Tastgrad über alle Signale 19 eines Signalblocks 22 im Wesentlichen gleich zu lassen.

Um zu verhindern, dass die Signaldauer 20 zu lang wird, werden der Vorrichtung Grenzwerte vorgegeben. Die Grenzwerte bestehen aus einer oberen und einer unteren Signaldauer 20. Der untere Grenzwert bestimmt die minimal mögliche Signaldauer 20. Der obere Grenzwert bestimmt die maximal mögliche Signaldauer 20. Wird bei der Signaldauer Generierung einer der Grenzwerte überschritten, bzw. unterschritten, so wird der entsprechende Grenzwert als Signaldauer 20 angenommen. Durch die Grenzwerte kann insbesondere erreicht werden, dass die Summe der Signaldauer 20 der Signale 19 eines Signalblocks 22 der Signalblockdauer 23 entspricht. Somit wird die vorbestimmte Signalblockdauer 23 nicht über- oder unterschritten.

## Patentansprüche

1. Elektromotor (1), insbesondere Lüftermotor, mit einer Vorrichtung (5) zur Erzeugung einer Signalfolge (3), wobei die Signalfolge (3) eine Vielzahl an Signalblöcken (22) umfasst und die Signalblöcke (22) eine Vielzahl an Signalen (19), mit einer Signaldauer (20), umfassen, wobei jeder Signalblock eine erste und eine zweite Signalgruppe umfasst, wobei die Signaldauer (20) der einzelnen Signale (19) variiert, **dadurch gekennzeichnet, dass** die Vorrichtung so ausgestaltet ist, dass die Signaldauer (20) der Signale (19) der zweiten Signalgruppe abhängig von der Gesamtdauer der Signale der ersten Signalgruppe berechnet oder über eine Tabelle bestimmt werden und weiterhin so ausgestaltet ist, dass die Berechnung oder Bestimmung der Signaldauer (20) der Signale (19) der zweiten Signalgruppe so erfolgt, dass eine definierte Dauer eines Signalblocks (23) und die Summe der Signaldauer (20) aller Signale (19) eines Signalblocks (22) im Wesentlichen gleich sind.

2. Elektromotor (1) nach Anspruch 1, **dadurch gekennzeichnet, dass** ein Signalblock (22) eine definierte Anzahl n an Signalen (19) umfasst und die Dauer mindestens von zwei Signalblöcken (22) konstant ist, insbesondere von allen Signalblöcken (22) konstant ist.

3. Elektromotor (1) nach Anspruch 1 oder 2, **dadurch gekennzeichnet, dass** der Elektromotor (1) durch die Signalfolge (3), insbesondere direkt oder über eine Motoransteuerung (56) angesteuert wird.

4. Elektromotor (1) nach einem der vorhergehenden Ansprüche, **dadurch gekennzeichnet, dass** die Signale (19) der ersten Signalgruppe vor den Signalen (19) der zweiten Signalgruppe ausgegeben werden und die Signaldauer (20) der ersten Signalgruppe, insbesondere der n-2 Signale eines Signalblocks, durch einen Zufallsgenerator (52) oder einer Tabelle (54), insbesondere einer Look-UP Tabelle bestimmt wird.

5. Elektromotor (1) nach einem der vorhergehenden Ansprüche, **dadurch gekennzeichnet, dass** die Signaldauer (20) der Signale (19) der zwei letzten Signale (19) eines Signalblocks berechnet oder aus einer zweiten Tabelle entnommen werden.

6. Elektromotor (1) nach einem der vorhergehenden Ansprüche, **dadurch gekennzeichnet, dass** die Signalfolge (3) ein pulsbreitenmodulierte Signalfolge (3) ist und die Signaldauer (20) eines Signals (19) mindestens die Dauer eines Pulses (11) und mindestens die Dauer einer Pulspause dieses Signals (19) umfasst.

7. Elektromotor (1) nach einem der vorhergehenden Ansprüche, **dadurch gekennzeichnet, dass** ein erster und ein zweiter Grenzwert einen Bereich für die Variation der Signaldauer (20) der Signale (19) definieren.

## Claims

1. Electric motor (1), in particular fan motor, having an apparatus (5) for generating a signal sequence (3), wherein the signal sequence (3) comprises a multiplicity of signal blocks (22) and the signal blocks (22) comprise a multiplicity of signals (19) with a signal duration (20), wherein each signal block comprises a first and a second signal group, wherein the signal duration (20) of the individual signals (19) varies, **characterized in that** the apparatus is configured in such a manner that the signal durations (20) of the signals (19) in the second signal group are calculated on the basis of the total duration of the signals in the first signal group or are determined using a table, and is also configured in such a manner that the signal durations (20) of the signals (19) in the second signal group are calculated or determined in such a manner that a defined duration of a signal block (23) and the sum of the signal durations (20) of all signals (19) in a signal block (22) are substantially the same.

2. Electric motor (1) according to Claim 1, **characterized in that** a signal block (22) comprises a defined number n of signals (19) and the duration of at least two signal blocks (22) is constant, in particular the duration of all signal blocks (22) is constant.

3. Electric motor (1) according to Claim 1 or 2, **characterized in that** the electric motor (1) is controlled by the signal sequence (3), in particular directly or via a motor controller (56).

4. Electric motor (1) according to one of the preceding claims, **characterized in that** the signals (19) in the first signal group are output before the signals (19) in the second signal group and the signal duration (20) of the first signal group, in particular of the n-2 signals in a signal block, is determined by a random number generator (52) or a table (54), in particular a look-up table.

5. Electric motor (1) according to one of the preceding claims, **characterized in that** signal durations (20) of the signals (19) of the last two signals (19) in a signal block are calculated or are taken from a second table.

6. Electric motor (1) according to one of the preceding claims, **characterized in that** the signal sequence (3) is a pulse-width-modulated signal sequence (3) and the signal duration (20) of a signal (19) comprises at least the duration of a pulse (11) and at least the duration of a pulse pause of this signal (19) .

7. Electric motor (1) according to one of the preceding claims, **characterized in that** a first and a second limit value define a range for varying the signal durations (20) of the signals (19).

## Revendications

1. Moteur électrique (1), en particulier moteur de ventilateur, comportant un dispositif (5) servant à générer une séquence de signaux (3), dans lequel la séquence de signaux (3) comprend une pluralité de blocs de signaux (22) et les blocs de signaux (22) comprennent une pluralité de signaux (19) ayant une durée de signal (20), dans lequel chaque bloc de signaux comprend des premier et second groupes de signaux, dans lequel la durée de signal (20) des différents signaux (19) varie, **caractérisé en ce que** le dispositif est conçu de manière à ce que la durée de signal (20) des signaux (19) du second groupe de signaux soit calculée en fonction de la durée de totale des signaux du premier groupe de signaux ou soit déterminée par le biais d'une table, et **en ce qu'**il est en outre conçu de manière à ce que le calcul ou la détermination de la durée de signal (20) des signaux (19) du second groupe de signaux soit effectué de telle sorte qu'une durée définie d'un bloc de signaux (23) et la somme des durées de signaux (20) de tous les signaux (19) du bloc de signaux (22) soient sensiblement égales.

2. Moteur électrique (1) selon la revendication 1, **caractérisé en ce qu'**un bloc de signaux (22) comprend un nombre défini n de signaux (19) et **en ce que** la durée d'au moins deux blocs de signaux (22), en particulier de tous les blocs de signaux (22), est constante.

3. Moteur électrique (1) selon la revendication 1 ou 2, **caractérisé en ce que** le moteur électrique (1) est commandé par la séquence de signaux (3), en particulier directement ou par l'intermédiaire d'une commande de moteur (56).

4. Moteur électrique (1) selon l'une des revendications précédentes, **caractérisé en ce que** les signaux (19) du premier groupe de signaux sont délivrés avant les signaux (19) du second groupe de signaux et **en ce que** la durée de signal (20) du premier groupe de signaux, en particulier des n-2 signaux d'un bloc de signaux, est déterminée par l'intermédiaire d'un générateur aléatoire (52) ou d'une table (54), en particulier d'une table de consultation.

5. Moteur électrique (1) selon l'une des revendications précédentes, **caractérisé en ce que** la durée de signal (20) des signaux (19) des deux derniers signaux (19) d'un bloc de signaux est calculée ou extraite d'une seconde table.

6. Moteur électrique (1) selon l'une des revendications précédentes, **caractérisé en ce que** la séquence de signaux (3) est une séquence de signaux modulée en largeur d'impulsion (3) et **en ce que** la durée de signal (20) d'un signal (19) comprend au moins la durée d'une impulsion (11) et au moins la durée d'un intervalle entre impulsions dudit signal (19).

7. Moteur électrique (1) selon l'une des revendications précédentes, **caractérisé en ce que** des première et seconde valeurs limites définissent une plage pour la variation de la durée de signal (20) des signaux (19).
